# EUROPEAN PATENT APPLICATION

(11) **EP 2 348 274 A1**
(43) Date of publication of application: **27.07.2011**
(21) Application number: 10250094.9
(22) Date of filing: 21.01.2010
(51) Int. Cl.: F41H 7/02, B60G 17/00

(54) **Land vehicle**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

There is disclosed a land vehicle (300) comprising:- a body (10) comprising an armoured hull (40); at least one wheel set (70); and a ride height adjustment mechanism connecting the body and the wheel set, wherein the ride height adjustment mechanism may vary the distance between the at least one wheel set and the body such as to enable the ground clearance (H) of the vehicle to be varied. As such a land vehicle according to this invention may be configured in at least a high ride condition and alternatively a low ride condition.

## Description

This invention relates to a land vehicle. In particular the invention relates to a mine resistant land vehicle.

It is desirable to provide a land vehicle that may offer protection to its crew or cargo in the event that a mine or other explosive device is detonated underneath the land vehicle.

In accordance with this desire, it is known to have a land vehicle that is provided firstly with an armoured hull, generally having a V-shape, and secondly with a relatively large ground clearance such as approximately 400mm (or 15 inches).

Such provisions tend to improve the resistance of the vehicle to ground based explosions. Such provisions also tend to give the land vehicle a high centre of gravity relative to other vehicles.

Known land vehicles with such provisions are generally known as Mine Resistant Armoured Patrol Vehicles (MRAPs) and include the RG33 as manufactured by the applicant. The RG33 can withstand the detonation of an explosive device, such as a mine or an Improvised Explosive Device (IED), beneath it to the extent that all of the on-board crew survive without serious injury.

The relatively high centre of gravity of MRAPs, whilst being a benefit insofar as it is associated with improved protection, can restrict the manoeuvrability of the MRAP. For example, an MRAP may need to be driven around corners at a relatively low speed so as to avoid toppling.

It is an object of the present invention to provide a land vehicle that tends to mitigate at least one of the disadvantages of the prior art.

According to a first aspect of the invention there is provided
A land vehicle comprising:-
a body comprising an armoured hull ;
at least one wheel set; and
a ride height adjustment mechanism connecting the body and the wheel set, wherein the ride height adjustment mechanism may vary the distance between the at least one wheel set and the body such as to enable the ground clearance of the vehicle to be varied.

The provision of such a ride height adjustment mechanism in a land vehicle confers flexibility as to how the vehicle may be configured.

In particular, the vehicle may be configured for a low ride height condition, where the distance between wheel set and the body, and hence the ground clearance, is minimised. It may be desirable to minimise the ground clearance to improve the handling of the vehicle when travelling at higher speeds or at corners or to improve aerodynamic performance, and hence improve the fuel efficiency.

Further, the vehicle may alternatively be configured for a high ride height condition where the wheel set to body distance and the ground clearance is maximised to improve the resistance to the effects of explosions from the ground or to manoeuvre over obstacles.

Still further, the vehicle may be configured in a condition intermediate to the high and low aforementioned conditions to suit the particular requirements of the moment to moment driving environment.

Each wheel set may comprise a single wheel or may comprise a plurality of wheels in order to tend to improve stability.

The land vehicle may be provided with a plurality of wheel sets, and in particular with an even number of wheel sets, half of which extend from one side of the vehicle, half of which extend from the other side.

The ride height adjustment mechanism may vary the distance between the wheel set and the body between a maximum and a minimum separation, the difference between the maximum separation and the minimum separation being between 0.4m and 3m. In particular, the difference may be approximately 2m.

Such clearance values have been determined by the applicant as providing a surprisingly useful ground clearance adjustment range. Hence the provision of a vehicle that can provide a height-adjustable wheel set to facilitate this clearance adjustment range is considered to be beneficial.

The land vehicle may be intended to have a weight greater than 10,000kg.

By providing a vehicle in this weight class, the land vehicle can be loaded with more kit or crew and carry a wider variety of modules. Further, it enables more armour to be applied and so enhances the mine resistant properties of the land vehicle. In particular, the weight of the vehicle may be greater than 13,000kg and further, approximately 30,000kg.

The body may comprise side walls, wherein the side walls are armoured. Further, the body may have a monocoque armoured structure.

Such a structure not only offers protection to the body against attack on any of its faces but it in fact tends to provide a more protected hull. The monocoque structure, insofar as it is rigid, helps to resist deformation of the hull and thus to preserve the form of the hull to deflect the blast rather than only absorbing the energy of the blast.

The monocoque armoured structure may comprise a skin formed of a plurality planar surfaces, each planar surface being inclined to the vertical. Thus the skin of the monocoque structure can tend to minimise the radar cross section of the vehicle.

The hull may be generally V-shaped.

Such a shape of hull is particularly effective at protecting the cargo or crew housed within the body from the effects of an explosion.

The wheel sets may be provided with at least one wheel, the at least one wheel comprising electrical drive means.

The use of electrical drives in the land vehicle wheels obviates the need for a mechanical power transmission and so tends to enable the wheels to adjust the wheel-body separation more freely, particularly when in comparison with a mechanical drive and transmission system where components (e.g. the axle) would tend to be inflexibly integrated with the vehicle body or chassis.

The flexibility and range of the electrical conduits which supply the electrical drives is configured with knowledge of the adjustment range of the wheel sets such that these characteristics of the conduit are not exceeded by any possible adjustment or combination of adjustments of the wheels sets.

Further, the provision of an electrical drive in each of a plurality of wheels has the result that the vehicle is multi-wheel drive. Such a vehicle has not only better mobility but also offers redundancy so that if a certain wheel drive ceases to function, the vehicle can still move. It may also make the moving parts of the vehicle easier to replace or service, thus reducing the mean time to repair (MTTR).

The electrical drives may be in the form of wheel drives (which may also be referred to as hub drives), that is to say motors which may be contained within the space envelope defined by the tyre (or whichever ground interface may be provided) of the wheel.

The vehicle may be provided with a plurality of wheels sets and each wheel set may have the distance between that wheel set and the body varied independently of the other wheel sets.

The provision of independently height adjustable wheel sets allows the land vehicle to optimise the position of the body for various tasks and to manoeuvre over a greater range of obstacles.

For example in order to traverse a fallen tree trunk, the vehicle may proceed directly towards the trunk and raise the front sets of wheel sets over the trunk, resting on the remaining wheel sets. Continuing to proceed, the front sets of wheel sets may be lowered once passed the trunk. Such wheel set movement may ripple back progressively through the following wheel sets until the trunk is traversed. This tends to provide a smooth ride for the crew inside the body.

As further example, where the land vehicle is travelling along a slope that is laterally inclined to the centreline of the vehicle, the slope can be compensated for. In particular the wheel sets on the higher part of the slope may be configured into a low ride condition and the wheel sets on the lower part of the slope may be configured into a high ride condition. Such an arrangement can not only tend to provide a more comfortable ride (by providing a generally horizontal body), but can also tend to improve the stability of the vehicle (by tending to move the centre of gravity of the vehicle back to a midpoint between the ground contact verticals).

Optionally, the ride height adjustment mechanism may comprise:- a wing member onto which the wheel sets are mounted, the wing member extending from a pivot at the hull at approximately the centreline of the vehicle, the pivot axis being generally parallel with the centreline, and an actuator extending between the wheel set end of the pivoted wing member and the vehicle body, such that actuation of the linear actuator tends to increase or decrease the distance between the wheel set and the body.

Such an adjustment mechanism tends to provide a substantial moment arm at which the actuator can act. Thus the force required to raise the body from the low ride height condition to the high ride condition can be reduce. Reducing this force can offer greater design flexibility with respect to the form which the actuator takes on. For example, the actuator may tend to convert the vehicle between conditions more quickly, or a lighter actuator may be used.

Such a wing member may comprise two converging struts and a brace further connecting the struts, wherein the divergent ends of the struts connect to hull at the pivot, and the convergent ends of the struts connect to the wheel set

As such, the mechanism tends to form triangular supports, and may be provided to form substantially equilateral triangular supports, and so provides a generally strong structure at which the wheel set may be mounted.

Optionally, the ride height adjustment mechanism may comprise:- an arm linkage, on to which the wheel set is mounted, the arm linkage comprising a plurality of link members and being suitable for occupying either a retracted or an extended condition; and an actuator for effecting the transition between the retracted and the extended condition.

Such arms are able to extend directly downwards from the hull. This tends to leave a greater amount of space between hull and ground in which there is no intervening material. As such this can help to improve the mine resistance of the land vehicle because where there is no intervening material, projectiles cannot be formed by the intervening material during the blast, which projectiles may otherwise tend to weaken the hull.

Further, the actuator can be configured to act as the suspension of the land vehicle.

The arm linkage may comprise:- an upper arm member connected at a first end to a shoulder extending from the body; and a forearm member connected at a first end to a second end of the upper arm member at a pivoted joint, the forearm connecting to the wheel set.

Such arm members allow the arm linkage to switch from its extended condition to its retracted condition by way of a coiling action, which may illustratively be referred to as a kneeling action. This form of action can make efficient use of space and employ robust load-bearing components which may be more easily maintained than other alternatives.

The arm linkage may further comprise a wrist member connected to a second end of the forearm member, the wrist member connecting to the wheel set.

So that the invention may be well understood, embodiments of the invention will now be described by way of example and with reference to the following figures of which:-

Figures 1 a and 1 b show a first embodiment of a land vehicle according to the present invention, the land vehicle being in a low ride height condition: Figure 1a shows a three dimensional representation of the vehicle when viewed from a first aspect, Figure 1b shows the vehicle from a second and head-on aspect;

Figures 2a and 2b correspond to figures 1 a and 1b respectively, insofar as the same embodiment of the vehicle is shown from the same aspects, but in figures 2a and 2b the land vehicle is arranged in a high ride height condition;

Figures 3a and 3b show a second embodiment of a land vehicle according to the present invention, viewed from a first and side-on aspect in figure 3a and from a second and head-on aspect in figure 3b: in both of figures 3a and 3b, the vehicle is in a low ride height condition;

Figures 4a and 4b correspond to figures 3a an 3b respectively, insofar as the same embodiment of the land vehicle is shown from the same aspects, but in figures 4a and 4b the vehicle is in a high ride height condition;

Figures 5a and 5b show close-up views of a three dimensional representation of a ride height adjustment mechanism as provided in the second embodiment of the land vehicle: in figure 5a the height adjustment mechanism is configured for a low ride height, and in figure 5b the height adjustment mechanism is configured for a high ride height; and

Figure 6 is a schematic diagram showing a power distribution system and a navigation system for use in a land vehicle according to the invention.

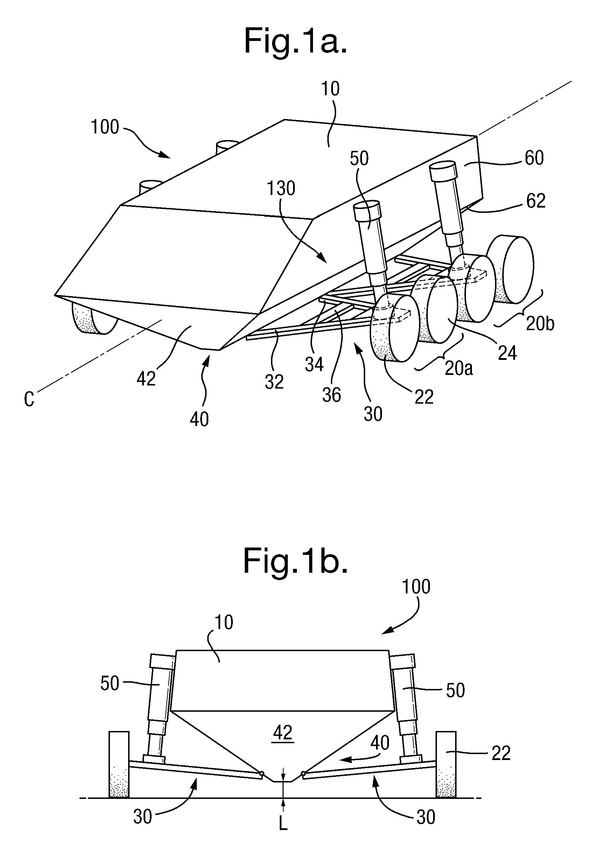

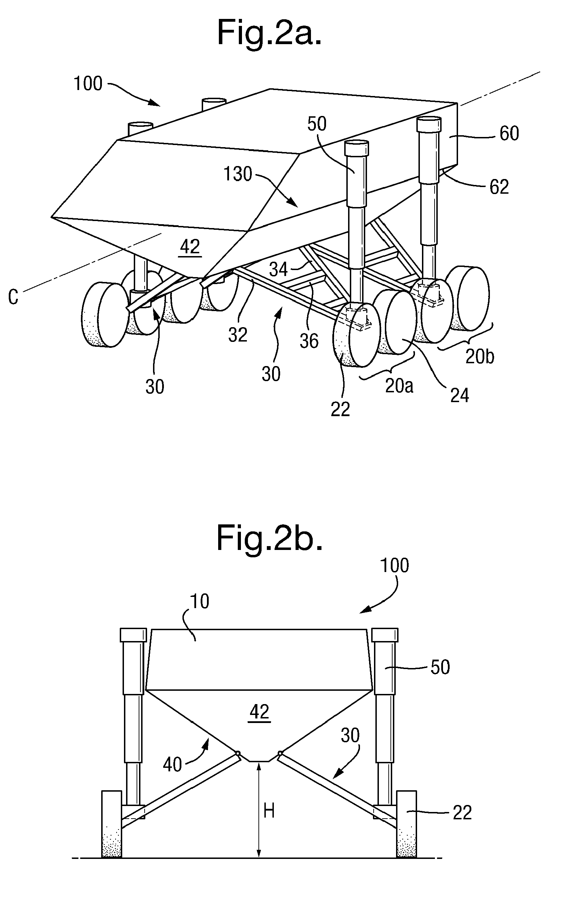

With reference to figures 1a, 1b, 2a and 2b, a land vehicle 100 comprises a body 10, four wheel sets (of which wheels set 20a and wheel set 20b are clearly visible in figure 1 a and 2a but the other two wheel sets, which are on the opposite side of the body 10 are hidden) and a set of ride height adjustment mechanisms 130, each ride height adjustment mechanism 130 being associated with a particular wheel set.

The body 10 defines a centreline C and comprises a hull section 40 that is substantially V-shaped, the vertex of the V-shaped hull section 40 being the part of the hull closest to the ground. The substantially V-shaped hull section 40 extends substantially from the front of the body 10 to the back of the body 10. The axis defined by the vertex-edge of the V-shape is generally parallel with the vehicle centreline, C.

The V-shaped section of the hull 40 terminates at its foremost point where it meets an inclined and substantially planar panel 42, which extends forwards and upwards from the V-shaped hull section 40, and has an inclination equivalent to that of the V-shaped section 40 of the hull.

The body 10 further comprises substantially planar side walls 60 which meet the V-shaped section of the hull 40 along an edge 62. The side walls 60 are inclined such that when the body is horizontal, the side walls 60 deviate sufficiently from vertical to enable the deflection of Rocket Propelled Grenades (RGPs).

The body 10 defines a substantially continuous surface, and as such further substantially planar panels are provided to occlude discontinuities that would otherwise exist between the side walls 60, the V-shaped hull second 40 and the panel 42 at the top, front and back of the body 10.

Each ride height adjustment mechanism 130 comprises a wing member 30 and an actuator 50. The actuator 50 has the form of a telescopic linear actuator and may extend to three times its fully compressed length. Actuation may be effected by providing a linear motor, a hydraulic system or a combination of these.

The wing member 30 has a generally A-shaped form defined by a first strut 32 and a second strut 34. The first strut 32 and the second strut 34 are convergent and are joined where they meet, thus forming the apex of the A. the struts 32, 34 are further interconnected by means of a brace 36 that interconnects the struts 32, 34 at substantially their midpoints.

The divergent ends of the struts 32, 34 (that is to say the feet of the A-shape) are attached, by means of hinges (not shown) along a common hinge axis, to the hull 40. The hinge axis defined by such hinges is generally parallel with the vehicle centreline C, and is in the region of the vertex of the V-shaped section of the hull 40.

The convergent end of the struts 32, 34 that is to say the apex of the A-shape, forms the connection to the wheel set 20.

The linear actuator 50 is fixed at a first end to the side wall 60 at a gimballed joint (not shown) such as a global swivel joint. The gimballed joint (not shown) holds the actuator 50 such that the actuator may pivot around edge 62. The second end of the linear actuator 50 is fixed to the convergent end of the struts 32, 34 at a gimballed joint (not shown) such as a global swivel joint.

Each wheel set 20 has two wheels 22, 24 arranged one behind the other and as such along an axis parallel to the centreline C. Each of the wheels comprises a wheel motor (not shown) and has associated with it a steering actuator (not shown).

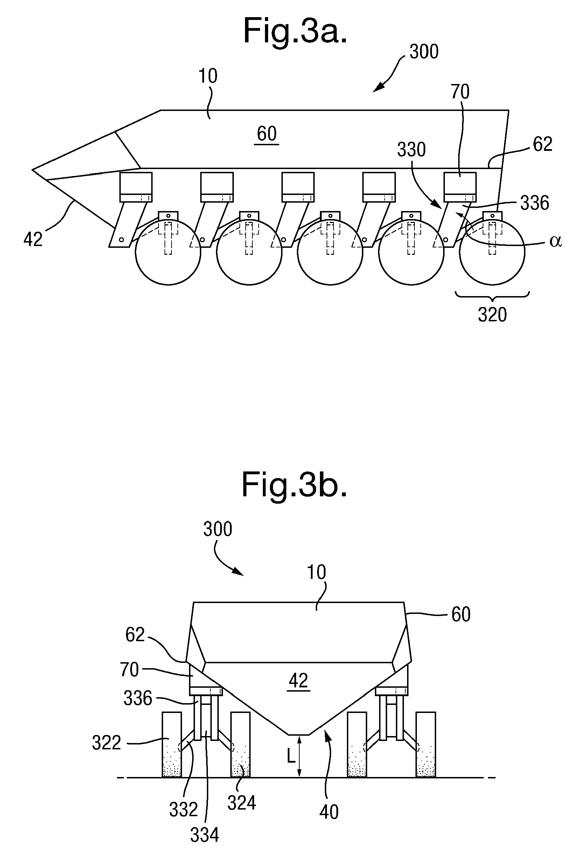

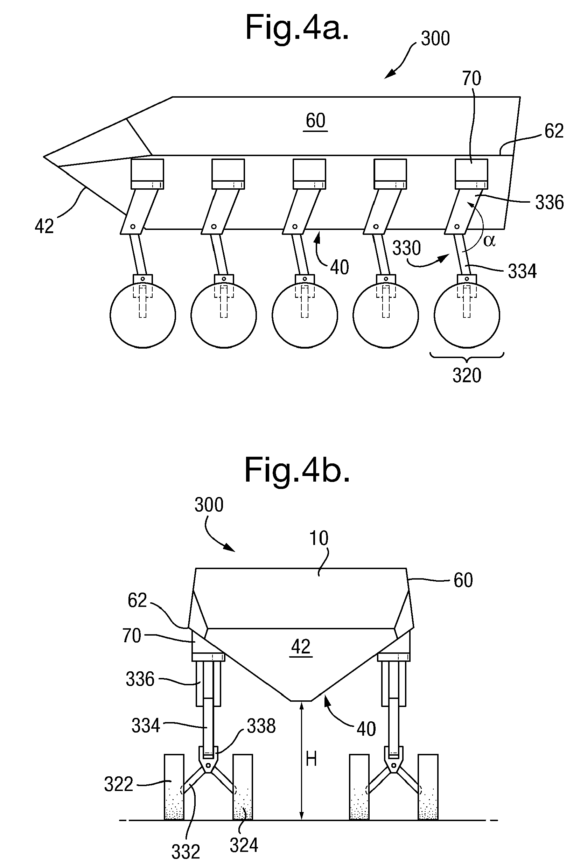

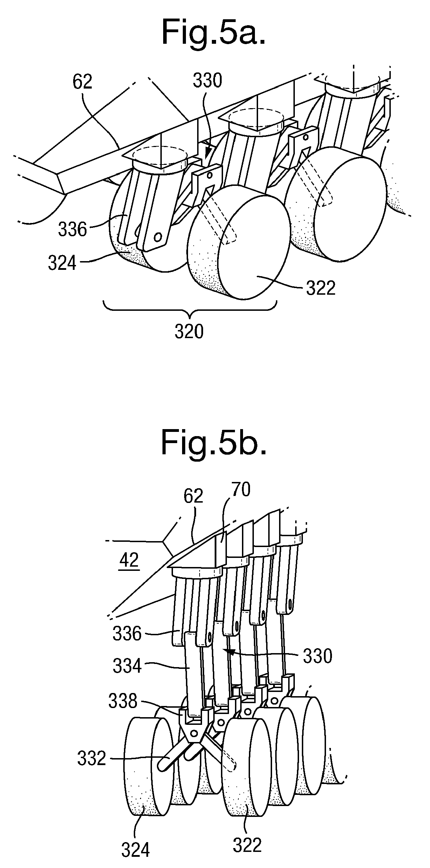

With reference to figures 3a, 3b, 4a, 4b, 5a and 5b, a land vehicle 300 is provided with an alternative ride adjustment mechanism 330 to that of land vehicle 100.

The ride adjustment mechanism 330 of the land vehicle 300 is in the form of an arm linkage 330 comprising an upper arm member 336, a forearm member 334 and a wrist member 338.

The arm linkage 330 is connected to the body 10 at the upper arm member 336 by way of a shoulder 70 which extends from an uppermost point on the V-shaped section of the hull 40 (that is to say the region of the V-shaped section of the hull 40 proximate to the edge 62). The connection between the arm linkage 330 and the shoulder 70 may be rigid or may include a motor (not shown) to allow the arm linkage 330 to swivel in the azimuth plane and hence act to further steer the vehicle.

The upper arm member 336 is connected at an elbow joint to the forearm member 334. The upper arm member 336 comprises two parallel members that are separated to define a void into which the forearm member may fit as it rotates about the elbow joint.

Further, the forearm member 334 is connected to the wrist member 338 at a wrist elevation pivot. The axis defined by the wrist elevation pivot and the elbow joint are generally parallel with each other and perpendicular to the vehicle centreline C.

Further, the wrist member 338 is connected at a wheel set roll joint to the apex of an arched member 332 that is arranged perpendicular to the centreline C. Each of the two ends of the arched member 332 connects to a wheel 322 and a wheel 324 respectively. In the land vehicle 300, each wheel set, e.g. 320, has two wheels e.g. 322 and 324 arranged side-by-side (i.e. coaxially).

An actuator (not shown) is provided at the arm linkage 330, which actuator has the form of a telescopic linear actuator that connects the top of the upper arm member 336 to the lower end of the forearm member 334. As with the actuator 50 in the land vehicle 100, other forms of actuator would be apparent to the skilled reader.

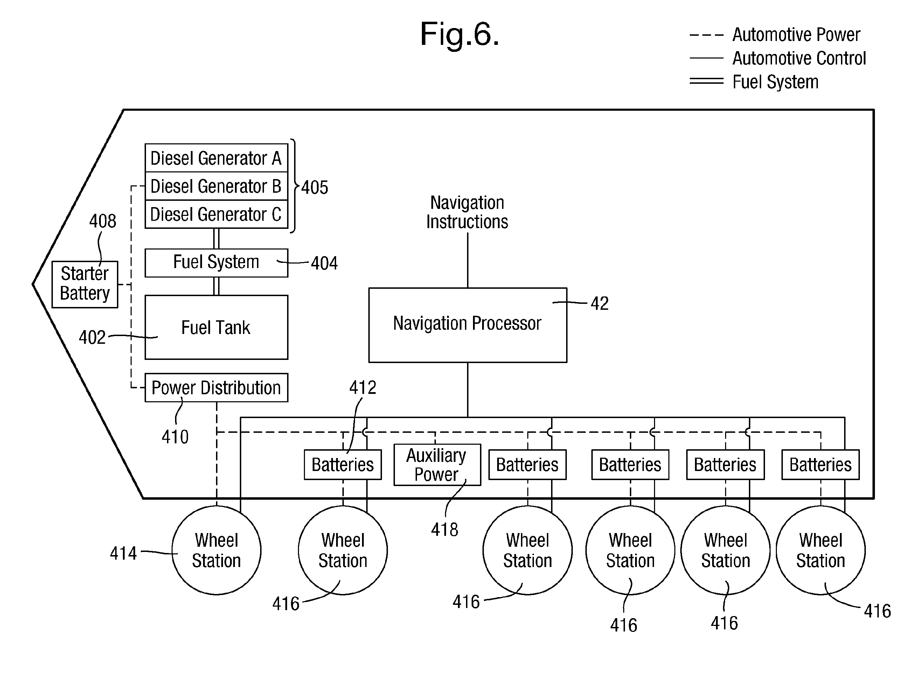

With reference to figure 6, land vehicles according to the invention (such as land vehicle 100 land vehicle 300) are considered, at least schematically, to comprise a plurality of wheel stations 414, 416. The wheel stations 414, 416 comprise not only the wheel sets (e.g. 20, 320), but also the automotive units relating to each wheel, such as the wheel drives (not shown) and steering actuators (not shown), and also the powered units relating to the height adjustment mechanism, such as the actuators in the height adjustment mechanism. Each wheel station is individually interfaced with a power system and a navigation system.

The power system comprises a fuel tank 402 that is arranged to provide an input to a fuel system 404. The fuel system 404 is arranged to provide an input to a set of diesel generators 405.

The diesel generators 405 are arranged to provide an electrical input to both a starter battery 408 and a power distributor 410.

The power distributor 410 is connected directly to the front wheel station 414 and as such is able to provide power to the wheel station 414. The power distributor 410 is also connected to batteries 412 each of which is further connected to a wheel station 416. As such, the power distributor 410 is connected to each wheel station 416.

Further, the power distributor 410 is connected to an auxiliary power supply 418. The auxiliary power supply 418 is connected to each of the wheel stations so as to be able to provide power in the manner of the power distributor 410 if necessary. The auxiliary power supply may be, for example, a photovoltaic panel.

The navigation system comprises a navigation processor 420 which receives a navigation instruction (which may be effected for example by way of a touchscreen interface or joystick operated by the driver) and transduces that instruction into an appropriate control signal for each of the wheel stations 414, 416. An individual control signal may be provided for each wheel station 414, 416.

In operation, land vehicles according to this invention can be in a high ride condition or a low ride condition.

The land vehicle 100 may operate in a high ride condition where all of the linear actuators 50 are extended (such extension may be for example to approximately three times the retracted length of the actuator) and thus the distance between the wheel set and the body is maximised. When the land vehicle is in such a condition and resting on a flat and horizontal ground plane, the ground clearance will be H. In such a condition, the wing members 30 will tend to be inclined to the horizontal ground plane at an angle of approximately 45°.

In order to convert into the low ride condition, the land vehicle 100 may retract each of its linear actuators 50 at the same time and rate. This retraction acts to shorten the distance between the wheel sets 20a, 20b and the body 10 and thus reduce the ground clearance.

As the linear actuators 50 retract from their maximum extension, they tend to incline or splay laterally as the horizontal component of the wing member 30 tends to increase. Such splaying is accommodated by the gimballed joints (not shown) which attach the linear actuators to the body 10 and the wing members 30.

When the linear actuators 50 are fully retracted, the ground clearance is L and the wing members 30 are substantially horizontal. The clearance L is substantially less than the clearance H.

The second embodiment of the invention, the land vehicle 300, may also operate in a high ride condition or a low ride condition with respective ground clearances H and L.

In the high ride condition of the land Vehicle 300, the internal angle α between the upper arm member 336 and the forearm member 334 is maximised, having a value of approximately 120°.

The land vehicle 300 may make the transition to a low ride condition by reducing the internal angle α. This may be done for example by actuating the linear actuator (not shown) having one end attached to the wrist end of the forearm 334 and the other end attached to the shoulder end of the upper arm 336. The actuator (not shown) is fully extended in the high ride position and fully retracted in the low ride position. Thus the land vehicle 300 may make the transition from the high ride height condition to the low ride height condition by retracting the actuator (not shown).

As the actuator (not shown) retracts, the internal angle α reduces causing a greater proportion of the forearm member 334 to occupy the void defined between the members of upper arm member 336. Further, the wrist member 338 counter rotates about the forearm member 334 in order to maintain the orientation of the wheel set 20 relative to the ground (that is to say the arched member 332 remains generally perpendicular to the ground).

In both of the described embodiments (though further embodiments need not have this feature), each of the wheel stations can be provided with independent navigation signals. That is to say each individual height adjustment mechanism may be moved (e.g. to alter the wheel set distance from the body) independently of the other wheel stations and/or the wheels may be turned and steered independently of the wheels on another wheel station.

Both of the embodiments of the land vehicle described with reference to the figures are shown having wheels. However, it is within the scope of the present invention that other forms of locomotion be employed. For example each wheel set may be replaced by a tracked unit. Such a replacement may make the land vehicle better suited to moving across snow, mud or sand.

Regarding fabrication, the following list of specific components or specific form of components may be seen as a guide to the skilled man when considering how to work the described embodiments of the present invention. Alternative components would be clear to the skilled man. Further, where specific examples of the components of the invention do not appear on this list, it would be clear to the skilled man what form such components could take.

As such, the wheel drives are electric motors adapted for containment within a wheel. In particular the drives may be the L-3 Communications M69-2 Magnet Motor Wheel Motor (as manufactured by L-3 communications by their subsidiary Magnet-motor GmbH of Petersbrunner Str. 2, D-82319 Starnberg, Germany; website www.L-3Com.com/MM ).

The steering actuators (not shown) are linear motors and in particular may be selected from the EXLAR GXS product range (as manufactured by Exlar Corporation 1470 Lake Drive, West Chanhassen, MN 55317, USA; website http://www.exlar.com/prod_GSX_oview.html).

Various diesel generator systems are suitable, in particular a suitable diesel generator system may be constituted by the combination of an APC OPOC engine (as manufactured by Advanced Propulsion Technologies, Inc., 69 Santa Felicia Drive, Goleta, CA 93117, Email: info@propulsiontech.com, website: hftp://www.propulsiontech.com/index.html) and a L3 Communications G35 Magnet Motor generator (as manufactured by L-3 communications by their subsidiary Magnet-motor GmbH of Petersbrunner Str. 2, D-82319 Starnberg, Germany; website www.L-3Com.com/MM ).

The body of the land vehicle is, in the above embodiments, fabricated from a frame skinned with armour-grade plating. The frame, which can have the form of a space frame, can be made from metal tubing. The metal is selected so as to provide the optimum characteristics for the particular role of the particular model of land vehicle. Alloys of Aluminium, Steel and Titanium may be suitable metals for the space frame. Further, the space frame may be formed of high strength composite components.

The armour-grade plating may be formed of steel alloys or may be formed from composite structures.

## Claims

1. A land vehicle comprising:-
a body comprising an armoured hull;
at least one wheel set; and
a ride height adjustment mechanism connecting the body and the wheel set, wherein the ride height adjustment mechanism may vary the distance between the at least one wheel set and the body such as to enable the ground clearance of the vehicle to be varied.

2. A land vehicle according to claim 1 such that the ride height adjustment mechanism can vary the distance between the wheel set and the body between a maximum and a minimum separation, the difference between the maximum separation and the minimum separation being between 0.4m and 3m.

3. A land vehicle according to claim 2 wherein the difference is approximately 2m.

4. A land vehicle according to any one of the preceding claims wherein the land vehicle is intended to have a weight greater than 10,000kg.

5. A land vehicle according to any one of the preceding claims wherein the body comprises side walls, wherein the side walls are armoured.

6. A land vehicle according to any one of the preceding claims wherein the body has a monocoque armoured structure.

7. A land vehicle according to any one of the preceding claims wherein the armoured hull is generally V-shaped.

8. A land vehicle according to any one of the preceding claims wherein the wheel sets are provided with at least one wheel, the at least one wheel comprising electrical drive means.

9. A land vehicle according to any of the preceding claims wherein the vehicle is provided with a plurality of wheels sets and each wheel set may have the distance between that wheel set and the body varied independently of the other wheel sets.

10. A land vehicle according to any one of the preceding claims wherein the ride height adjustment mechanism comprises:-
a wing member onto which the wheel sets are mounted, the wing member extending from a pivot at the hull at approximately the centreline of the vehicle, the pivot axis being generally parallel with the centreline; and
an actuator extending between the wheel set end of the pivoted wing member and the vehicle body,
such that actuation of the linear actuator tends to increase or decrease the distance between the wheel set and the body.

11. A land vehicle according to claim 10 wherein the wing member comprises two converging struts and a brace further connecting the struts, wherein the divergent ends of the struts connect to hull at the pivot, and the convergent ends of the struts connect to the wheel set.

12. A land vehicle according to any one of claims 1 to 9 wherein the ride height adjustment mechanism comprises:-
an arm linkage, on to which the wheel set is mounted, the arm linkage comprising a plurality of link members and being suitable for occupying either a retracted or an extended condition; and
an actuator for effecting the transition between the retracted and the extended condition.

13. A land vehicle according to claim 12 wherein the arm linkage comprises:-
an upper arm member connected at a first end to a shoulder extending from the body; and
a forearm member connected at a first end to a second end of the upper arm member at a pivoted joint, the forearm connecting to the wheel set.

14. A land vehicle according to claim 13, the forearm member further comprising
a wrist member connected to a second end of the forearm member, the wrist member connecting to the wheel set.
